# EUROPEAN PATENT APPLICATION

(11) **EP 4 822 521 A1**
(43) Date of publication of application: **14.10.2026**
(21) Application number: 26164830.7
(22) Date of filing: 13.03.2026
(51) Int. Cl.: G06F 8/35

(54) **METHOD AND SYSTEM FOR GENERATING PURPOSIVE MODELS USING A LARGE LANGUAGE MODEL**

(30) Priority: 11.04.2025 IN 202521035627
(71) Applicant: Tata Consultancy Services Limited, Maharashtra (IN)
(72) Inventor: RAJBHOJ, Asha Sushilkumar, 411028 Pune, Maharashtra (IN); SOMASE, Akanksha Aappasaheb, 411057 Pune, Maharashtra (IN); SANT, Tanay Sandeep, 411057 Pune, Maharashtra (IN); VALE, Sushant Sshrinivas, 411028 Pune, Maharashtra (IN); KULKARNI, Vinay, 411028 Pune, Maharashtra (IN)
(74) Representative: Goddar, Heinz J.

(57) **Abstract**

The present invention relates to the field of model driven engineering. Creation of the purposive machine-processable models is an intellect-intensive activity requiring business domain as well as modeling expertise, which is in short supply. Hence, embodiments of present disclosure provide a method and system for generating purposive models using a Large Language Model (LLM). The method includes receiving a purposive metamodel and associated pattern trees. Each pattern tree has pattern elements including pattern nodes, with associated pattern properties, connected via pattern edges. The pattern elements may be associated with pattern mapping statements which are executed by a pattern interpretation technique and corresponding objects are created in the purposive model. The pattern mapping statements include prompt generation functions which are executed by the pattern interpretation technique to generate prompt and obtain response from the LLM which is used to populate the purposive model.

## Description

### CROSS-REFERENCE TO RELATED APPLICATIONS AND PRIORITY

The present application claims priority from Indian application no. 202521035627, filed on April 11, 2025.

### TECHNICAL FIELD

The present invention generally relates to the field of Model-Driven Engineering (MDE), and, more particularly, to a method and system for generating purposive models using a Large Language Model.

### BACKGROUND

Model-Driven Engineering (MDE) is a practice of raising models to first-class artefacts of the software engineering process, using such models to analyze, simulate, and reason about properties of the system under development, and eventually, often auto-generate (a part of) its implementation. MDE has emerged as solution for automating various processes such as requirement elicitation and analysis, design specification and the like. Errors in model creation, often due to ambiguous terminology or misinterpretations among stakeholders, can lead to costly and time-consuming issues. These models are highly dependent on the expertise of Subject Matter Experts (SMEs), making the process both skill-intensive and time-consuming. However, creating these models is still a manual task that requires deep domain knowledge and familiarity with modeling languages (meta-models), often not available to all involved parties. An effective solution must bridge the gap between domain experts, who may struggle with technical modeling languages, and IT professionals, who may lack business domain knowledge. Large Language Models (LLMs) offer a promising solution. Trained on vast datasets, LLMs have the potential to handle complex, domain-specific knowledge and can assist for model creation. Successful interaction with LLMs requires the right context-specific prompts for relevant responses. To efficiently instantiate large models, a divide-and-compose approach is most effective. This requires a mechanism to define subsets of the meta-model. Also, there is a need for configurability in the way prompts are written for interacting with LLMs using the subset meta-model, connecting models created for different subset meta-models, augmenting with pre-existing knowledge.

### SUMMARY

Embodiments of the present disclosure present technological improvements as solutions to one or more of the above-mentioned technical problems recognized by the inventors in conventional systems. For example, in one embodiment, a method for generating purposive models using a Large Language Model (LLM) is provided. The method includes receiving a purposive metamodel and a plurality of pattern trees corresponding to the purposive metamodel. Each of the plurality of pattern trees comprises a plurality of pattern elements including a plurality of pattern nodes, with associated pattern properties, connected via a plurality of pattern edges. Each of the plurality of pattern nodes maps to a class in the purposive metamodel and each of the plurality of pattern edges maps to an association of the class. Each of the plurality of pattern elements are optionally associated with one or more pattern mapping statements. Further, the method includes interpreting each pattern tree among the plurality of pattern trees to generate a model by firstly obtaining a structured text for a first level object corresponding to a first level pattern node of the pattern tree based on interpretation of an associated pattern mapping statement using a pattern interpretation technique. Further the pattern tree is interpreted by creating a first level object node of the model corresponding to the first level object with a plurality of associated property values determined from the structured text and iteratively performing for a plurality of levels of the pattern tree, the steps comprising: obtaining one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique. The first level object node is used for obtaining one or more second level object names. If the pattern mapping statement is not specified at the one or more pattern edges then the pattern interpretation technique generates a prompt based on structure of a previous pattern node and the one or more subsequent level pattern nodes, associated with the one or more pattern edges. Further the steps comprise creating one or more subsequent level object nodes of the model corresponding to the one or more subsequent level object names along with associated property value. Furthermore, the steps comprise updating the model by creating a plurality of association links connecting the previous level object node and the one or more subsequent level object nodes based on a plurality of association information obtained from the metamodel. The model obtained after interpreting the plurality of pattern trees comprises a purposive model of the purposive metamodel.

In another aspect, a system for generating purposive models using a LLM is provided. The system includes: a memory storing instructions; one or more communication interfaces; and one or more hardware processors coupled to the memory via the one or more communication interfaces, wherein the one or more hardware processors are configured by the instructions to receive a purposive metamodel and a plurality of pattern trees corresponding to the purposive metamodel. Each of the plurality of pattern trees comprises a plurality of pattern elements including a plurality of pattern nodes, with associated pattern properties, connected via a plurality of pattern edges. Each of the plurality of pattern nodes maps to a class in the purposive metamodel and each of the plurality of pattern edges maps to an association of the class. Each of the plurality of pattern elements are optionally associated with one or more pattern mapping statements. Further, the one or more hardware processors are configured to interpret each pattern tree among the plurality of pattern trees to generate a model by firstly obtaining a structured text for a first level object corresponding to a first level pattern node of the pattern tree based on interpretation of an associated pattern mapping statement using a pattern interpretation technique. Further the pattern tree is interpreted by creating a first level object node of the model corresponding to the first level object with a plurality of associated property values determined from the structured text and iteratively performing for a plurality of levels of the pattern tree, the steps comprising: obtaining one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique. The first level object node is used for obtaining one or more second level object names. If the pattern mapping statement is not specified at the one or more pattern edges then the pattern interpretation technique generates a prompt based on structure of a previous pattern node and the one or more subsequent level pattern nodes, associated with the one or more pattern edges. Further the steps comprise creating one or more subsequent level object nodes of the model corresponding to the one or more subsequent level object names along with associated property value. Furthermore, the steps comprise updating the model by creating a plurality of association links connecting the previous level object node and the one or more subsequent level object nodes based on a plurality of association information obtained from the metamodel. The model obtained after interpreting the plurality of pattern trees comprises a purposive model of the purposive metamodel.

In yet another aspect, there are provided one or more non-transitory machine-readable information storage mediums comprising one or more instructions which when executed by one or more hardware processors cause a method for generating purposive models using a LLM. The method includes receiving a purposive metamodel and a plurality of pattern trees corresponding to the purposive metamodel. Each of the plurality of pattern trees comprises a plurality of pattern elements including a plurality of pattern nodes, with associated pattern properties, connected via a plurality of pattern edges. Each of the plurality of pattern nodes maps to a class in the purposive metamodel and each of the plurality of pattern edges maps to an association of the class. Each of the plurality of pattern elements are optionally associated with one or more pattern mapping statements. Further, the method includes interpreting each pattern tree among the plurality of pattern trees to generate a model by firstly obtaining a structured text for a first level object corresponding to a first level pattern node of the pattern tree based on interpretation of an associated pattern mapping statement using a pattern interpretation technique. Further the pattern tree is interpreted by creating a first level object node of the model corresponding to the first level object with a plurality of associated property values determined from the structured text and iteratively performing for a plurality of levels of the pattern tree, the steps comprising: obtaining one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique. The first level object node is used for obtaining one or more second level object names. If the pattern mapping statement is not specified at the one or more pattern edges then the pattern interpretation technique generates a prompt based on structure of a previous pattern node and the one or more subsequent level pattern nodes, associated with the one or more pattern edges. Further the steps comprise creating one or more subsequent level object nodes of the model corresponding to the one or more subsequent level object names along with associated property value. Furthermore, the steps comprise updating the model by creating a plurality of association links connecting the previous level object node and the one or more subsequent level object nodes based on a plurality of association information obtained from the metamodel. The model obtained after interpreting the plurality of pattern trees comprises a purposive model of the purposive metamodel.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for generating purposive models using a Large Language Model (LLM), according to some embodiments of the present disclosure.
FIG. 2A and FIG. 2B is a flow diagram illustrating a method for generating purposive models using a LLM, using the system of FIG. 1, according to some embodiments of the present disclosure.
FIG. 3 is an architectural diagram illustrating components used for an example implementation of the method illustrated in FIG. 2, according to some embodiments of the present disclosure.
FIG. 4 illustrates an example purposive metamodel corresponding to a requirement specification of a product, according to some embodiments of the present disclosure.
FIGS. 5A and FIG. 5B illustrates example pattern trees associated with the purposive metamodel illustrated in FIG. 4, according to some embodiments of the present disclosure.
FIGS. 6A and FIG. 6B illustrates example purposive models generated by using the method illustrated in FIG. 2 with the purposive metamodel illustrated in FIG. 4 and pattern trees illustrated in FIGS. 5A and 5B as input, according to some embodiments of the present disclosure.
FIGS. 7A and FIG. 7B, collectively referred to as FIG. 7, illustrates a comparison of performance metrics for the purposive models generated for 2 products using method of FIG. 2, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Traditionally, in Model Driven Engineering (MDE), creation of purposive machine-processable models is an intellect-intensive activity requiring business domain as well as modeling expertise, which is in short supply. Conventional methods are mostly performed manually and therefore require significant cognitive effort and domain expertise. Hence, embodiments of present disclosure provide a method and system for generating purposive models using a Large Language Model (LLM). The method includes receiving a purposive metamodel and associated pattern trees. Each pattern tree has pattern elements including pattern nodes, with associated pattern properties, connected via pattern edges. The pattern elements may be associated with pattern mapping statements. Each pattern tree is interpreted to generate a purposive model by executing the pattern mapping statements using a pattern interpretation technique and creating corresponding objects in the purposive model. The pattern mapping statements include prompt generation functions which are executed by the pattern interpretation technique to generate prompt and obtain response from a LLM which is used to populate the purposive model. In case the pattern mapping statement is not defined at a pattern edge, then, the pattern interpretation technique generates a prompt by considering structure of previous and subsequent pattern nodes in the pattern tree. Thus, the embodiments of the present disclosure integrates LLMs with Model-Driven Engineering (MDE), allowing Subject Matter Experts (SMEs) to easily generate purposive models automatically through intuitive interactions with LLMs. By leveraging meta-models and a pattern-based approach, the present disclosure reduces the cognitive load and manual effort required in model authoring, allowing SMEs to create models more efficiently and with higher quality. Embodiments of present disclosure help in faster and accurate generation of purposive models with minimum efforts as compared to the conventional techniques.

### GLOSSARY

1. Purposive metamodel: A purposive metamodel is a model of a modelling language or information system for a purpose that provides a set of rules, structures, and definitions used to create models. It specifies the conceptual framework for defining valid instances (models) within a particular domain.
2. Purposive model: A purposive model is an abstraction or representation of an information system, constructed based on a purposive metamodel. It consists of objects, relationships, and constraints that conform to the rules of the metamodel. A purposive model is an instance of a purposive metamodel that reflects a particular configuration or situation in the domain.

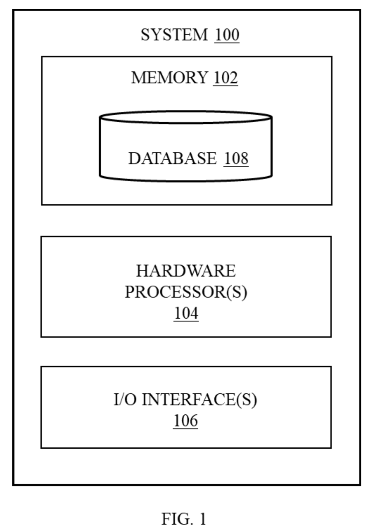

Referring now to the drawings, and more particularly to FIGS. 1 to 7, where similar reference characters denote corresponding features consistently throughout the figures, there are shown preferred embodiments, and these embodiments are described in the context of the following exemplary system and/or method.

FIG. 1 illustrates an exemplary block diagram of a system for generating purposive models using an LLM, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

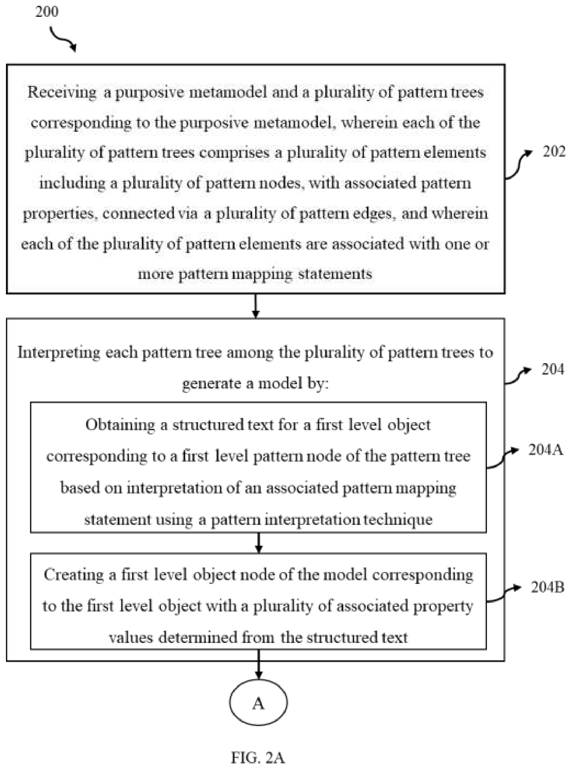

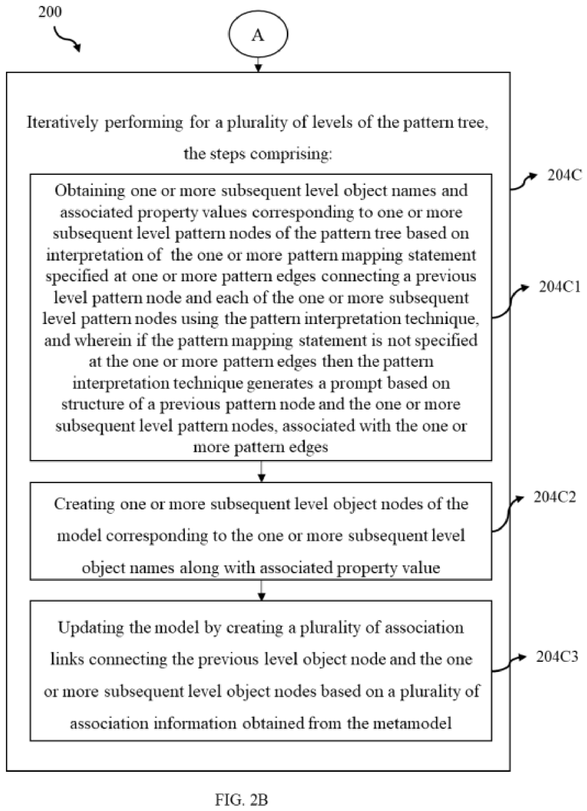

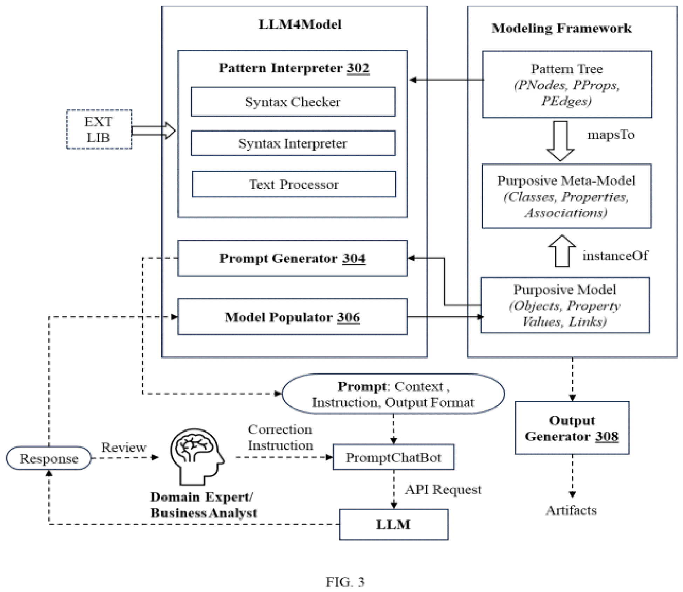

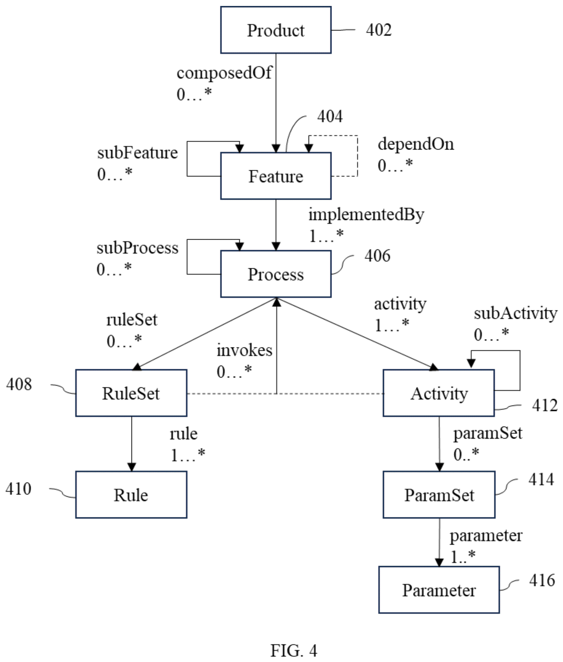

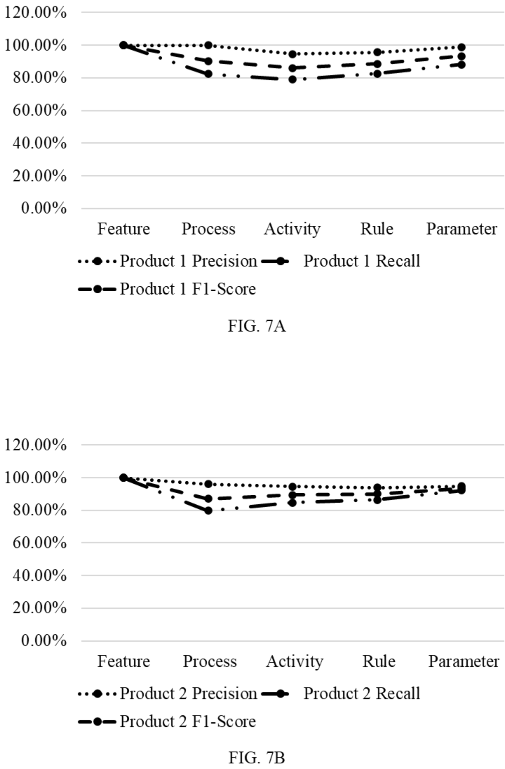

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The memory 102 stores a plurality of modules (not shown in FIG. 1) comprising pattern interpreter, prompt generator, model populator, output generator and the like. The plurality of modules (illustrated in FIG. 3) store instructions to perform different functionalities required for one possible implementation of the method of FIG. 2. The database 108 stores information pertaining to inputs fed to the system 100 and/or outputs generated by the system (e.g., at each stage), specific to the methodology described herein. Functions of the components of system 100 are explained in conjunction with flow diagram of FIG. 2, architecture diagram of FIG. 3, examples illustrated in FIGS. 4 - 6 and experimental result illustrated in FIG. 7, for generating purposive models using an LLM.

FIG. 2 is a flow diagram illustrating a method for generating purposive models using an LLM, using the system of FIG. 1, according to some embodiments of the present disclosure. In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, flow diagram of FIG. 2, architecture diagram of FIG. 3, examples illustrated in FIGS. 4-6 and experimental results illustrated in FIG. 7, for generating purposive models using an LLM. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the one or more hardware processors 104 are configured to receive a purposive metamodel and a plurality of pattern trees (alternatively referred to as pattern model or patterns) corresponding to the purposive metamodel. Each of the plurality of pattern trees comprises a plurality of pattern elements including a plurality of pattern nodes (PNodes), with associated pattern properties (PProp), connected via a plurality of pattern edges (PEdge). Each of the plurality of pattern nodes maps to a class in the purposive metamodel and each of the plurality of pattern edges maps to an association of the class. Each of the plurality of pattern elements is associated with one or more pattern mapping statements specified using a pattern mapping language. In some scenarios, the pattern mapping statements may not be specified for some of the pattern elements in the pattern tree. The one or more pattern mapping statements are a combination of: i) a model reference statement (mm_expr_stmt) for referring to one or more elements in the purposive model, ii) a function invocation statement (function_stmt) for invoking a prompt generation function, and one of a text processor function and an external function, iii) a default value statement (default _value_stmt) for assigning a default value to properties of objects created in the purposive model corresponding to the pattern properties associated with each of the plurality of pattern nodes, iv) a condition statement (condition_stmt) for conditional use of values, and v) an input statement for obtaining an input from a user. The pattern mapping language syntax is defined using following mapping language grammar production rules. Lexer tokens are specified in uppercase letters, with "?" indicating optional expressions and "*" representing zero or more occurrences of an expression. QSTRING represents a constant string. Operators such as "&" (AND) and "|" (OR) are also used.
**pat_map_stmt:** stmt (stmt)*;
**stmt**: mm_expr_stmt | function_stmt | default_value_stmt | condition_stmt;
**mm_expr_stmt:** NameExpr DOT NameExpr;
**function_stmt:** NameExpr LEFTPAREN ParamExpr (',' ParamExpr) * RIGHTPAREN;
**default_value_stmt**: (QSTRING);
**condition_stmt:** IF (mm_expr_stmt | function_stmt) (EQUALS QSTRING)?;
ParamExpr: mm_expr_stmt | QSTRING;
NameExpr: QSTRING;

Further, at step 204 of the method 200, the one or more hardware processors 104 are configured to interpret each pattern tree among the plurality of pattern trees to generate a model by performing steps 204A to 204C. At step 204A, the one or more hardware processors 104 are configured to obtain a structured text for a first level object corresponding to a first level pattern node of the pattern tree based on interpretation of an associated pattern mapping statement using a pattern interpretation technique. The pattern interpretation technique executes the one or more pattern mapping statements by performing one or more actions comprising: i) replacing the one or more elements referred by the model reference statement with corresponding pattern elements in one or more recently created objects in the purposive model, ii) generating a prompt with an input prompt string comprised in the prompt generation function, considering structure of a subsequent pattern node associated with the pattern edge, and obtaining a structured text by prompting a LLM using the prompt, wherein if the prompt generation function comprises one or more parameters, then the pattern interpretation technique obtains values of the one or more parameters from the purposive model to generate the prompt, and wherein a structured text is obtained by prompting the LLM using the prompt, iii) executing the text processor function to process input text associated with the pattern mapping statement, iv) assigning an object property value with one of a) a value in the default value statement or b) a value in the condition statement if one or more associated conditions are satisfied, and v) receive a required input from a user based on the input statement.

Further, at step 204B of the method 200, the one or more hardware processors 104 are configured to create a first level object node of the model corresponding to the first level object with a plurality of associated property values determined from the structured text.

Further at step 204C of the method 200, the one or more hardware processors 104 are configured to iteratively perform, for a plurality of levels of the pattern tree, the steps comprising steps 204C1 to 204C3. At step 204C1, one or more subsequent level object names and associated property values corresponding to one or more subsequent level pattern nodes of the pattern tree are obtained based on interpretation of the one or more pattern mapping statement specified at one or more pattern edges connecting a previous level pattern node and each of the one or more subsequent level pattern nodes using the pattern interpretation technique. Next at step 204C2, one or more subsequent level object nodes of the model are created corresponding to the one or more subsequent level object names along with associated property value. Finally at step 204C3, the model is updated by creating a plurality of association links connecting the previous level object node and the one or more subsequent level object nodes based on a plurality of association information obtained from the purposive metamodel. The model obtained after interpreting the plurality of pattern trees comprises a purposive model of the purposive metamodel.

Following is an algorithmic representation of the step 204:

```
 Function Main
 Input: patList: List <Pattern>
 Begin
 1. for each pattern in patList
 i. error ← checkPatternSyntax(pattern)
 ii. if error, Return
 iii. response ← Interpret (pattern.rootPNode.mapping)
 iv. ExtractObjects(pattern.rootPNode, response)
 End
 Function ExtractObjects
 Input: pNode: PNode, response: String
 Output: objList: List <Object>
 Begin
 1. initialize objList
 2. for resElement in response
 i. obj←CreateObject (pNode.class, resElement)
 ii. ExtractPropsVal (obj, pNode, resElement)
 iii. for each pEdge in pNode.pEdgeList
 ExtractLinks (obj, pNode , pEdge)
 iv. objList.add(obj)
 3. Return objList
 End
 Function ExtractPropsVal
 Input: obj: Object, pNode: PNode , response: String
 Begin
 1. for each pProp in pNode.pPropList
 if pProp.mapping is specified:
 i. textVal ← Interpret (pProp.mapping)
 ii. if textVal exists, obj.CreatePropVal(pProp.property, textVal)
 else, obj. CreateProp Val(pPropproperty, response.propVal)
 End
 Function ExtractLinks
 Input: srcObj:Object, srcNode:PNode, pEdge:PEdge
 Begin
 1. tgtNode = pEdge.targetPNode
 2. if pEdge.mapping is specified:
 i. response ← Interpret (pEdge.mapping)
 ii. objList ← ExtractObjects (tgtNode, response)
 iii. srcObj.CreateLinks(pEdge.association, objList)
 End
```

The **Main** function accepts a list of pattern trees (patList) as input. For each pattern tree, it validates the syntax of the pattern mapping statements specified for all pattern elements. It then interprets the pattern mapping statement associated with a root PNode of the pattern tree and passes the output to the **ExtractObjects** function. Using this response, **ExtractObjects** creates instances of the class associated with the PNode. For every object, it invokes **ExtractPropsVal** function and for all PEdge of PNode, it invokes **ExtractLinks.** Object property values can be populated either through a pattern mapping specification for a property (PProp) or retrieved from the LLM response. The **ExtractPropVal** function checks whether a pattern mapping statement for PProp is specified. If a pattern mapping statement is specified, then it is interpreted, and retrieved text value is used to create the property value. If the pattern mapping statement is not specified, then, the pattern interpretation technique includes the property name in the generated prompt so as to get value through the LLM. **ExtractLinks** function is executed for each PEdge of the current PNode for each object of the corresponding class. The retrieved response text is then passed to the function **ExtractObjects**, which recursively creates objects. The objects returned by **ExtractObjects** are subsequently linked to the parent object. In this way, the pattern mapping statements of all pattern elements are interpreted to recursively build the purposive model.

FIG. 3 is an architectural diagram illustrating components used for an example implementation of the method illustrated in FIG. 2, according to some embodiments of the present disclosure. An example mode of implementation of system and method of present disclosure is as an LLM4Model tool that generates prompts to be executed on a LLM and authors purposive model based on LLM's response text. LLM4Model is configured by defining a purposive meta-model (meta-model defines a model schema) and pattern trees over the purposive meta-model. It provides a pattern mapping language to specify how model elements should be authored through LLM-based information elicitation. LLM4Model has a Pattern Interpreter 302, a Prompt Generator 304 and a Model Populator 306. The Pattern Interpreter 302 validates the syntax of pattern mapping statements specified for all pattern elements of Pattern trees for any grammatical errors. It interprets the pattern mapping statements using the pattern interpretation technique. For pattern mapping statements where prompt generation is specified, the Prompt Generator 304 generates the necessary prompts that encompasses text related to instructions, context, and the desired format for the response output. Instructions are derived using elements of the purposive meta-model, and model authored so far is used for context setting. The generated prompt is executed on LLM and response from LLM is used by Model populator 306 for purposive model creation. The model authoring process provides human-in-loop interface for review of responses by domain experts. In case a response is not satisfactory, domain experts can edit the response manually and/or instruct LLM for the correction. Once populated, the purposive model can be further analyzed for sanity, inter-dependencies and/or additional property values can be updated, links can be created among the populated model elements. For instance, in the case of a requirements specification model, additional feature dependencies can be created, requirements specification model can be linked to design model and so on. Once the purposive model is generated, an output generator 308 uses the purposive model for the analysis and generation purpose to generate various artifacts such as analysis reports, document generation, traceability report, code generation and like.

FIG. 4 illustrates an example purposive metamodel corresponding to a requirement specification of a product, according to some embodiments of the present disclosure. Business functionality decomposition for a product/application is specified as a subFeature association. A product 402 has one or more features 404. Each *Feature* 404 is implemented through a *Process* 406. *Process* may have multiple *subprocesses. Process* is described with one or more *Activities 412.* Process may have one or more RuleSets 408. A *RuleSet* depicts the logical grouping of multiple *Rule.* Activity takes multiple Input-Output (IO) *Parameter 416* logically grouped by a *ParamSet 414.* All Classes have *Name* and *Description* properties. Process has additional properties-*entryCriteria, exitCriteria.* Rule has *ruleType* property. Parameter has *dataFormat* properties. Dependency associations are shown in FIG. 4 with dotted lines.

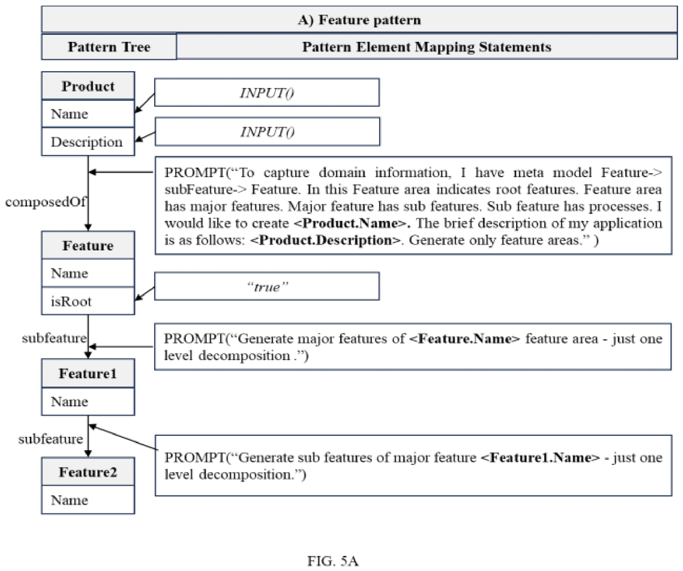

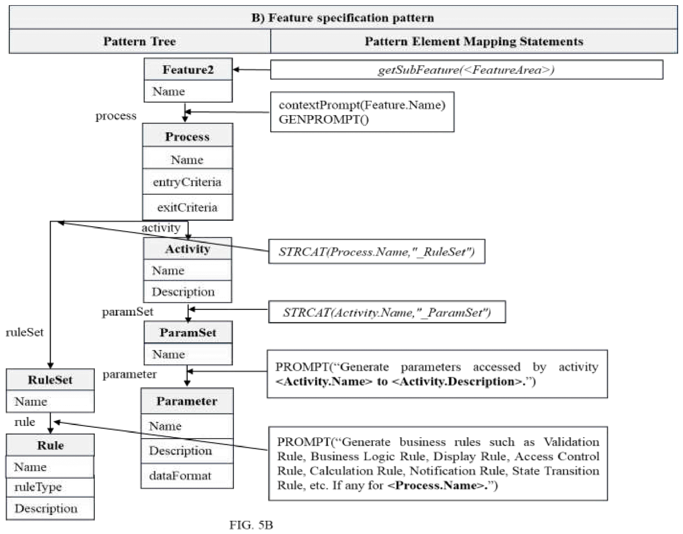

For instantiating a requirements specification meta model two patterns are defined - i) Feature Pattern, ii) Feature Specification Pattern as shown in FIGS. 5A and 5B respectively. The Feature Pattern (illustrated in FIG. 5A) is used for instantiation of feature hierarchy. This pattern has root PNode corresponding to the Product class, with two PProps for Name and Description. For both PProp function the INPUT function is used to collect user input. The user is expected to provide the product name and a description of the initial requirements outlining the scope of the application. For the composedOf PEdge between the Product and the Feature PNodes, a pattern mapping statement is specified using custom prompt text, which is passed as a parameter to the PROMPT function. The input of this function sets the context by describing the requirements specification meta-model and instructing the generation of feature areas. The prompt includes the mm_expr_stmt Product.Name and Product.Description in prompt text. For the first level feature (Feature PNode) the default_value_stmt is used to set the "isRoot" property to "true". There is no pattern mapping statements specified for property 'Name' of Feature, Feature1, Feature2 PNodes. These are generated through LLM as a response to prompt generated from the PEdge corresponding to parent association. Both subfeature PEdge are specified with custom prompt using PROMPT function and uses mm _expr_stmt referring to the parent feature for context setting.

The Feature Specification Pattern (illustrated in FIG. 5B) is used to instantiate the detailed requirements specification model for each subfeature. This pattern has root PNode corresponding to Feature class with a PProp for Name. The mapping for the root PNode class uses the external function getSubFeature, which takes feature area name as input. This function returns the list of feature objects, with the Name property values in JSON format. For each subfeature, the corresponding pattern is interpreted. The mapping for the PEdge process uses the purposive external contextPrompt function followed by GENPROMPT function. The GENPROMPT function generates a prompt when no prompt generation function is mentioned. The pattern interpretation technique considers structure of previous and subsequent PNodes to generate the prompt. The contextPrompt function takes Product Name, Feature area name and Feature.Name to navigates the model and constructs appropriate context setting prompt that incorporates the meta-model information and the feature hierarchy populated by the Feature Pattern for the product. For the activity PEdge, no mapping is specified. Here default prompt is generated using the pattern tree by considering structure of previous and subsequent node in the pattern tree connected to the PEdge. A RuleSet is created corresponding to each process, with the mapping for RuleSet PEdge using the STRCAT library function to concatenate Process.Name with constant string "_RuleSet". To generate rules, the process name is referred in the PEdge of rule. The specified prompt for the rule PEdge, instructs to classify the rules in predefined classes. A ParamSet is created for each activity, and to generate parameters, the Activity.Description is used in the mapping of parameter PEdge.

### USE CASE EXAMPLE

The method 200 has been implemented to generate a purposive model for 2 products: i) an employee pension system which manages employee pension funds, and ii) depository system which handles the electronic storage, transfer, and settlement of securities, ensuring efficient and secure trading. The implementation for the first product is explained in detail herein. LLM used for experiments is ChatGPT, however, any suitable model can be used to achieve the desired results. It is noted that embodiments described herein are discussed in the context of a large language model / artificial intelligence model. However, a person of skill in the art will appreciate that no specific language model is necessary to achieve the objectives of the present disclosure.

A purposive metamodel (similar to the metamodel illustrated in FIG. 4) and two pattern trees (illustrated in FIGS. 5A and 5B) corresponding to the employee pension system are received. Pattern interpretation begins with the interpretation of the mapping of root Pattern Node (PNode) followed by its associated PNodes through Pattern Edge (PEdge) interpretation. The root PNode has 2 Pattern Properties (PProp): Product.Name and Product.Description. Both the PProps are associated with an INPUT() pattern mapping statement. Thus, the pattern interpretation technique obtains user input for these 2 properties. Suppose the user input for Product.Name is *"Employee Pension System"* and for Product.Description is *"The application context is INDIA Geography. Outlined below are the application business requirements: On-board new employees to the pension plan and capture employee information, Enable employees to allocate their funds to available asset types, Allow administrator and employee to view their current and past fund balances, and their contribution allocation on a monthly basis, Record month-end returns for the various asset types and incorporate these returns into the employee balances, Provide employee-specific and overall dashboards of fund-wise balances."* A first level object corresponding to the root PNode is created in the purposive model with associated PProp values.

The root PNode is connected to a PEdge (composedOf) which is associated with a prompt generation pattern mapping statement. Prompt is generated by replacing the values corresponding to Product.Name and Product.Description used in input template prompt text. The generated prompt is executed, and the response received in JSON format as - *{"Feature Areas": [ {"Name": "Employee Management"}, {"Name": "Fund Allocation"}, {"Name": "Balance Tracking"}, {"Name": "Returns Recording"}, {"Name": "Dashboard Generation"}]}.* Using the JSON data, one or more second level objects are created in the purposive model and "isRoot" property is set to "true" as mentioned in pattern tree. Once the second level objects are created, the next PEdge (i.e., Feature.subfeature) is interpreted. As illustrated in FIG. 5A, the PEdge is associated with a prompt generation pattern mapping statement. The pattern interpretation technique generates a prompt for each feature area in response of the previous PEdge (composedOf) to elicit major features by replacing the values corresponding to Feature.Name with feature area name in input template prompt text along with expected format. For instance, for the first feature area "Employee Management" following prompt is generated: *"Generate major features of Employee Management feature area - just one level decomposition. Generate output in below format: {Feature:[{Name}, {Name}, ..., {Name}]}".* The generated prompt is executed, and the response is received from LLM in JSON format as - *{"Feature": [{"Name": "Employee Onboarding"}, {''Name'': "Employee Information Capture"}]}.* Two third level objects are created in the purposive model corresponding to the features 'Employee Onboarding' and 'Employee Information Capture'.

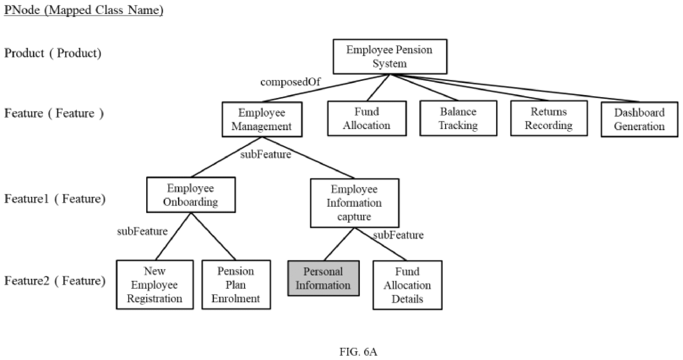

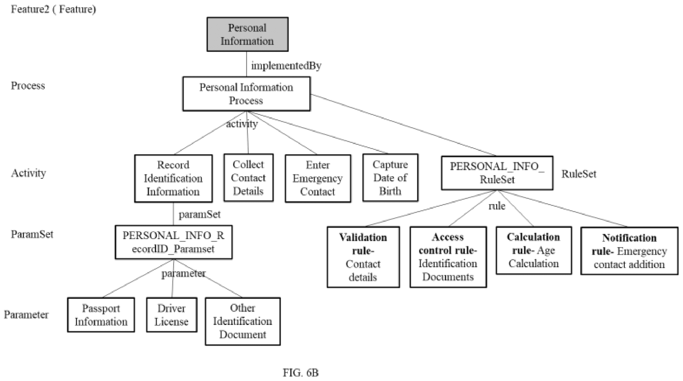

Next, the subsequent PEdge corresponding to Feature1.subfeature is interpreted by the pattern interpretation technique. As illustrated in FIG. 5A, the PEdge is associated with a prompt generation pattern mapping statement. The pattern interpretation technique generates a prompt for each feature in the response of previous PEdge (Feature.subfeature) to elicit sub features by replacing the values corresponding to Feature1.Name with major feature name in input template prompt text. For instance, for the major feature "Employee Onboarding" following prompt is generated: *"Generate subfeatures of major feature Employee Onboarding - just one level decomposition. Generate output in below format: {Feature: [{Name}, {Name},* ..., *{Name}]}".* The generated prompt is executed, and the response received in JSON format as - *{"Feature": [{''Name'': "New Employee Registration"}, {''Name'': "Pension Plan Enrolment"}]}.* Similarly, the method 200 interprets Feature pattern, prepares and executes prompts in depth first approach for all major features of all feature areas. Upon execution of the Feature Pattern tree (illustrated in FIG. 5A), the Feature Specification pattern tree (illustrated in FIG. 5B) is executed to generate detailed specifications model in terms of Process, Activity, Rule and links among them. FIG. 6A and 6B illustrate the generated purposive model. As shown in FIG. 6A, the root node in the purposive model corresponds to Product class i.e., *Employee Pension System.* It is composed of 5 features, namely, *Employee Management, Fund Allocation, Balance Tracking, Returns Recording,* and *Dashboard Generation.* These features form second level of objects in the purposive model. Sub-levels of only the first feature (Employee Management) have been illustrated here for the sake of example. The *Employee Management* feature has 2 sub-features, namely, *Employee Onboarding* and *Employee Information Capture* which form third level of objects in the purposive model. The *Employee Onboarding* is further comprised of *New Employee Registration* and *Pension Plan Enrolment* sub features. The *Employee Information Capture* is further comprised of *Personal Information* and *Fund Allocation Details.* FIG. 6B illustrates specification of the *Personal Information* sub-feature which is implemented by a process named *Personal Information Process.* This process has 4 activities and a *PERSONAL _INFO_RuleSet.* The activities are: *Record Information Collection, Collect Contact Details, Enter Emergency Contact,* and *Capture Date of Birth.* The *Record Information Collection* activity has a *PERSONAL_INFO_RecordID* parameter set which comprises of a plurality of parameters including *Passport Information, Driver Licence* and *Other Identification Documents.* The *PERSONAL_INFO_RuleSet* includes validation rule for contact details, access control rule for identification documents, calculation rule for age calculation, and notification rule for emergency contact addition.

Table 1 shows the summary of generated purposive model for both the products. Large-scale models are automatically authored through systematic prompting with ChatGPT, enabled by LLM4Model's interpretation of Feature and Feature Specification patterns.

**Table 1**

| **Pattern** | **Meta-Model Element** | **Product1 Count** | **Product 2 Count** |
|---|---|---|---|
| Feature Pattern | Feature Area | 5 | 2 |
| | Major Feature | 10 | 12 |
| | Feature | 20 | 50 |
| Feature Specification Pattern | Process | 40 | 250 |
| | Activity | 70 | 715 |
| | RuleSet | 20 | 200 |
| | Rule | 85 | 1355 |
| | Param Set | 70 | 715 |
| | Parameter | 231 | 3442 |

The purposive models generated using LLM4Model are first validated against model well-formedness constraints such as property type, cardinalities, mandatories, and so on. The content is also checked using various model sanity checking rules on the model such as - i) Name of features are unique, ii) Processes should have multiple activities, iii) Rules have rule type, iv) Each feature/ requirement must be mapped to at least one process, and so on. The sanity check report is generated for validation and suitable corrections are done in the model. Generated models are further analyzed for relevance, accuracy, and completeness. For validation, a model sheet is generated. Each model element is given a score "1" for meeting all the criteria and "0" was given for lack of relevance, partial accuracy, or complete inaccuracy. The meta-model class specific validation criteria are defined. For instance, - processes are validated against the input business requirements and coverage of the necessary details such as "create", "delete", or "update" related functionality, rules are validated against predefined rule types, parameters are validated for data type and so on. Validation of objects considers Name of an object along with all its property values and associated objects. Validation scores are used for computing accuracy. The precision and recall metrics were used to evaluate the relevance of ChatGPT's generated responses related to requirements specification model elements according to equations 1 and 2, respectively. F1 score is computed using equation 3. $Precision = \frac{Relevant Responses Retrieved}{All Retrieved Responses}$ (1) $Recall = \frac{Relevant Responses Retrieved}{All Relevant Responses}$ (2) $F 1 Score = 2 ∗ \frac{Precision ∗ Recall}{Precision + Recall}$ (3)

FIGS. 7A and 7B illustrates a comparison of performance metrics for the purposive models generated for product 1 and product 2, respectively, using method of FIG. 2, according to some embodiments of the present disclosure. The performance metrics include the precision, recall, and F1 score. For both the products, feature hierarchy generated was satisfactory with precision, recall, and F1-score metric values of 100%. For product 1 processes, F1 score observed was ~90% whereas for product 2 it was ~87%. For product 1 activities, F1 score observed was ~86% whereas for product 2 it was ~89%. For product 1 rules, F1 score observed was ~89% whereas for product 2 it was ~90%. For product 1 and product 2 parameters, F1 score observed was ~93%. Thus, it can be observed that the method 200 yielded good results.

Due to the probabilistic nature of LLMs, there is a possibility of errors in the retrieved responses. A review of responses by Subject Matter Experts (SMEs) is desirable. Hence, LLM4Model provides a human in-loop user interface for model authoring. Occasionally context forgetting is observed for authoring large-size requirements specification models. This issue was addressed through divide and compose strategy by authoring models for each feature area. Overall effort involved in model authoring was minimal due to automation provided by LLM4Model. The creation of purposive models would have taken ~4 months of effort by experts. Manual creation of a model necessitates expertise in technologies such as modelling, and domain. Hence involves skill, effort, and time. Whereas, using LLM4Model approach, for product1 it took ~7 person days and for product 2 it took us ~14 person days. The effort includes the generation and validation effort. A large amount of effort saving is observed. LLM4Model is domain-agnostic and can be easily applied to other product domains such as insurance and life sciences. For products with complex, multi-customer, multi-geographic, and multi-market requirements, specification models may be more intricate. Creating these purposive models manually (as in conventional methods) is a time-, effort- and intellect-intensive activity. LLM4Model provides a generic solution for the automated authoring of models. Validating multiple large-scale products with good results implies that it can be widely used across multiple applications and domains.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving (202), via one or more hardware processors, a purposive metamodel and a plurality of pattern trees corresponding to the purposive metamodel, wherein each of the plurality of pattern trees comprises a plurality of pattern elements including a plurality of pattern nodes, with associated pattern properties, connected via a plurality of pattern edges, wherein each of the plurality of pattern nodes maps to a class in the purposive metamodel and each of the plurality of pattern edges maps to an association of the class, and wherein each of the plurality of pattern elements are associated with one or more pattern mapping statements; and
interpreting (204), via the one or more hardware processors, each pattern tree among the plurality of pattern trees to generate a model by:
obtaining (204A) a structured text for a first level object corresponding to a first level pattern node of the pattern tree based on interpretation of an associated pattern mapping statement using a pattern interpretation technique;
creating (204B) a first level object node of the model corresponding to the first level object with a plurality of associated property values determined from the structured text; and
iteratively performing (204C) for a plurality of levels of the pattern tree, the steps comprising:
obtaining (204C1) one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique, wherein the first level object node is used for obtaining one or more second level object names, and wherein if the pattern mapping statement is not specified at the one or more pattern edges then the pattern interpretation technique generates a prompt based on structure of a previous pattern node and the one or more subsequent level pattern nodes, associated with the one or more pattern edges;
creating (204C2) one or more subsequent level object nodes of the model corresponding to the one or more subsequent level object names along with associated property value; and
updating (204C3) the model by creating a plurality of association links connecting the previous level object node and the one or more subsequent level object nodes based on a plurality of association information obtained from the purposive metamodel,
wherein the model obtained after interpreting the plurality of pattern trees comprises a purposive model of the purposive metamodel.

2. The method as claimed in claim 1, wherein the one or more pattern mapping statements are a combination of: i) a model reference statement for referring to one or more elements in the purposive model, ii) a function invocation statement for invoking a prompt generation function, and one of a text processor function and an external function, iii) a default value statement for assigning a default value to objects created in the purposive model corresponding to the pattern properties associated with each of the plurality of pattern nodes, iv) a condition statement for conditional use of values, and v) an input statement for obtaining an input from a user.

3. The method as claimed in claim 2, wherein the pattern interpretation technique executes the one or more pattern mapping statements by performing one or more actions comprising: i) replacing the one or more elements referred by the model reference statement with corresponding pattern elements in one or more recently created objects in the purposive model, ii) generating a prompt with an input prompt string comprised in the prompt generation function, considering structure of a subsequent pattern node associated with the pattern edge, and obtaining a structured text by prompting a Large Language Model (LLM) using the prompt, wherein if the prompt generation function comprises one or more parameters, then the pattern interpretation technique obtains values of the one or more parameters from the purposive model to generate the prompt, and wherein a structured text is obtained by prompting the LLM using the prompt, iii) executing the text processor function to process input text associated with the pattern mapping statement, iv) assigning an object property value with one of a) a value in the default value statement or b) a value in the condition statement if one or more associated conditions are satisfied, and v) receive a required input from a user based on the input statement.

4. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
receive a purposive metamodel and a plurality of pattern trees corresponding to the purposive metamodel, wherein each of the plurality of pattern trees comprises a plurality of pattern elements including a plurality of pattern nodes, with associated pattern properties, connected via a plurality of pattern edges, wherein each of the plurality of pattern nodes maps to a class in the purposive metamodel and each of the plurality of pattern edges maps to an association of the class, and wherein each of the plurality of pattern elements are associated with one or more pattern mapping statements; and
interpret each pattern tree among the plurality of pattern trees to generate a model by:
obtaining a structured text for a first level object corresponding to a first level pattern node of the pattern tree based on interpretation of an associated pattern mapping statement using a pattern interpretation technique;
creating a first level object node of the model corresponding to the first level object with a plurality of associated property values determined from the structured text; and
iteratively performing for a plurality of levels of the pattern tree, the steps comprising:
obtaining one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique, wherein the first level object node is used for obtaining one or more second level object names, and wherein if the pattern mapping statement is not specified at the one or more pattern edges then the pattern interpretation technique generates a prompt based on structure of a previous pattern node and the one or more subsequent level pattern nodes, associated with the one or more pattern edges;
creating one or more subsequent level object nodes of the model corresponding to the one or more subsequent level object names along with associated property value; and
updating the model by creating a plurality of association links connecting the previous level object node and the one or more subsequent level object nodes based on a plurality of association information obtained from the purposive metamodel,
wherein the model obtained after interpreting the plurality of pattern trees comprises a purposive model of the purposive metamodel.

5. The system as claimed in claim 4, wherein the one or more pattern mapping statements are a combination of: i) a model reference statement for referring to one or more elements in the model, ii) a function invocation statement for invoking a prompt generation function, and one of a text processor function and an external function, iii) a default value statement for assigning a default value to objects created in the purposive model corresponding to the pattern properties associated with each of the plurality of pattern nodes, iv) a condition statement for conditional use of values, and v) an input statement for obtaining an input from a user.

6. The system as claimed in claim 5, wherein the pattern interpretation technique executes the one or more pattern mapping statements by performing one or more actions comprising: i) replacing the one or more elements referred by the model reference statement with corresponding pattern elements in one or more recently created objects in the purposive model, ii) generating a prompt with an input prompt string comprised in the prompt generation function, considering structure of a subsequent pattern node associated with the pattern edge, and obtaining a structured text by prompting a Large Language Model (LLM) using the prompt, wherein if the prompt generation function comprises one or more parameters, then the pattern interpretation technique obtains values of the one or more parameters from the purposive model to generate the prompt, and wherein a structured text is obtained by prompting the LLM using the prompt, iii) executing the text processor function to process input text associated with the pattern mapping statement, iv) assigning an object property value with one of a) a value in the default value statement or b) a value in the condition statement if one or more associated conditions are satisfied, and v) receive a required input from a user based on the input statement.

7. One or more non-transitory machine-readable information storage mediums comprising one or more instructions which when executed by one or more hardware processors cause:
receiving a purposive metamodel and a plurality of pattern trees corresponding to the purposive metamodel, wherein each of the plurality of pattern trees comprises a plurality of pattern elements including a plurality of pattern nodes, with associated pattern properties, connected via a plurality of pattern edges, wherein each of the plurality of pattern nodes maps to a class in the purposive metamodel and each of the plurality of pattern edges maps to an association of the class, and wherein each of the plurality of pattern elements are associated with one or more pattern mapping statements; and
interpreting each pattern tree among the plurality of pattern trees to generate a model by:
obtaining a structured text for a first level object corresponding to a first level pattern node of the pattern tree based on interpretation of an associated pattern mapping statement using a pattern interpretation technique;
creating a first level object node of the model corresponding to the first level object with a plurality of associated property values determined from the structured text; and
iteratively performing for a plurality of levels of the pattern tree, the steps comprising:
obtaining one or more subsequent level object names and associated property values corresponding to one or more subsequent level pattern nodes of the pattern tree based on interpretation of the one or more pattern mapping statement specified at one or more pattern edges connecting a previous level pattern node and each of the one or more subsequent level pattern nodes using the pattern interpretation technique, wherein the first level object node is used for obtaining one or more second level object names, and wherein if the pattern mapping statement is not specified at the one or more pattern edges then the pattern interpretation technique generates a prompt based on structure of a previous pattern node and the one or more subsequent level pattern nodes, associated with the one or more pattern edges;
creating one or more subsequent level object nodes of the model corresponding to the one or more subsequent level object names along with associated property value; and
updating the model by creating a plurality of association links connecting the previous level object node and the one or more subsequent level object nodes based on a plurality of association information obtained from the purposive metamodel,
wherein the model obtained after interpreting the plurality of pattern trees comprises a purposive model of the purposive metamodel.

8. The one or more non-transitory machine readable information storage mediums as claimed in claim 7, wherein the one or more pattern mapping statements are a combination of: i) a model reference statement for referring to one or more elements in the purposive model, ii) a function invocation statement for invoking a prompt generation function, and one of a text processor function and an external function, iii) a default value statement for assigning a default value to objects created in the purposive model corresponding to the pattern properties associated with each of the plurality of pattern nodes, iv) a condition statement for conditional use of values, and v) an input statement for obtaining an input from a user.

9. The one or more non-transitory machine readable information storage mediums as claimed in claim 8, wherein the pattern interpretation technique executes the one or more pattern mapping statements by performing one or more actions comprising: i) replacing the one or more elements referred by the model reference statement with corresponding pattern elements in one or more recently created objects in the purposive model, ii) generating a prompt with an input prompt string comprised in the prompt generation function, considering structure of a subsequent pattern node associated with the pattern edge, and obtaining a structured text by prompting a Large Language Model (LLM) using the prompt, wherein if the prompt generation function comprises one or more parameters, then the pattern interpretation technique obtains values of the one or more parameters from the purposive model to generate the prompt, and wherein a structured text is obtained by prompting the LLM using the prompt, iii) executing the text processor function to process input text associated with the pattern mapping statement, iv) assigning an object property value with one of a) a value in the default value statement or b) a value in the condition statement if one or more associated conditions are satisfied, and v) receive a required input from a user based on the input statement.
